# EUROPEAN PATENT SPECIFICATION

(11) **EP 3 122 629 B1**
(45) Date of publication and mention of the grant of the patent: **24.01.2018**
(21) Application number: 15723034.3
(22) Date of filing: 24.03.2015
(51) Int. Cl.: B64D 11/00, B64D 25/00, B64D 45/00, B64D 11/06

(54) **TAMPER DETECTABLE CONTAINER**
BEHÄLTER MIT MANIPULATIONSNACHWEIS
CONTENANT DÉTECTEUR DE FRAUDE

(30) Priority: 26.03.2014 GB 201405457
(43) Date of publication of application: 01.02.2017
(73) Proprietor: Servecorp Limited, West Sussex RH11 0TG (GB)
(72) Inventor: WHITE, Noel, West Sussex RH16 4QT (GB)
(74) Representative: Gray, Peter John Bracey
(86) International application number: PCT/GB2015/050857
(87) International publication number: WO 2015/145121

(56) References cited:
- EP-A2- 2 636 332
- EP-A2- 2 667 324
- WO-A1-2013/119713
- US-A1- 2007 232 164

## Description

### Field of the Disclosure

This disclosure relates to a container and in particular to a tamper detectable container and a tamper detection system incorporating the container. The disclosure is particularly, but not exclusively, applicable to the stowage of life vests on commercial passenger aircraft.

### Background to the Disclosure

A container carrying valuable or important contents may be provided with a security seal that makes it evident whether or not the inside of the container has been accessed impermissibly, for example during storage or transit. One type of security seal is an adhesive label adapted to disintegrate irreversibly during removal. The adhesive label is usually stuck at a location extending between a lid and a body of the container. The interior of the container can then only be accessed by removing the label to allow the lid and body to separate, thereby causing the label to disintegrate, or otherwise tearing the label. As the disintegration or tearing is irreversible, the label cannot be re-used and impermissible access to the container can be detected based on the absence of the label or its torn or disintegrated state. Security can be further improved by making each label unique, for example by applying a serial number to each label, so that replacement of one label with another may also be detected.

Because such seals and labels are placed where a lid and a body of a container separate to allow access to the interior of the container, they generally make the container harder to open. In situations where easy access to the interior of the container is required, this can be problematic. For example, aviation regulations require commercial passenger aircraft to carry a life vest for each passenger. These life vests are typically stowed under each seat in a container. The life vest must be accessible for use in the event of an emergency. Indeed, the regulations require that a passenger is able to remove a life vest from its container by application of a force of no greater than 6N. So, although security issues have led airlines to require that each life vest is secured in its container by a security seal, placing a security seal in the form of an adhesive label where the lid and body of the container separate to allow access to the life vest may not be appropriate.

Radio-Frequency Identification (RFID) technology allows identification information held in RFID tags to be read remotely by a RFID reader. RFID tags are generally small and can be provided relatively cheaply in a variety of forms, including labels. RFID technology is useful for quickly identifying large numbers objects having RFID tags attached to them, and has found utility in logistics systems in object tracking.

It has been suggested to make use RFID technology in the field of aircraft life vest stowage. Specifically, patent publication number WO2013/119713 describes a detection system including a frangible fastener incorporating a RFID circuit. The RFID circuit has a resonator component in a shaft of the fastener, and the resonator element is designed to fail when the shaft is broken. It is suggested attach the fastener to a container for a life vest in such a way that the shaft severs when the container is opened, and the RFID circuit ceases to function. Interrogating of the RFID circuit can quickly determine whether or not the container has been opened, depending on the presence or absence of a response from the RFID circuit. A problem with this detection system is that the frangible fastener is specifically adapted for use with the particular container. This means that it is relatively complex in comparison to other general purpose RFID tags, making the system expensive to implement.

EP2636332 describes a container for a life vest that incorporates a sealing arrangement, but not a RFID tag. US2007/0232164 describes a container for a life vest incorporating a RFID tear tag disposed on the container so that it is not practical to gain access to the container without compromising the tag. The tag is attached to the surface of the container at a location that parts when the container is opened. Finally, EP2667324, over which appended claim 1 is characterised, describes a container for a life vest that has a frangible RFID tag disposed across an opening via which the life vest is removed from the container. However, the RFID tag does not cooperate with a closure that securely closes the opening.

### Summary of the Disclosure

According to a first aspect of the disclosure, there is provided a container defining an interior volume, the container comprising:
an opening through which the interior volume is accessible from outside of the container;
first and second tag receiving holes extending between the interior volume and the outside of the container;
a tag holder comprising first and second parts that are separable from one another; and
a radio-frequency identification tag having a frangible part arranged when broken to cause the radio-frequency identification tag to cease functioning, characterised by
a closure flap moveable between an unfolded configuration in which the opening is uncovered and a folded configuration in which the closure flap covers the first and second tag receiving holes towards the outside of the container and at least partially covers the opening, the closure flap having a sling, wherein the first part of the tag holder is insertable into the first tag receiving hole but not removable from the first tag receiving hole from a side of the first tag receiving hole located towards the outside of the container, and the second part of the tag holder is insertable into the second tag receiving hole but not removable from the second tag receiving hole from a side of the second tag receiving hole located towards the outside of the container, and, with the closure flap in the folded configuration and the radio-frequency identification tag mounted on the tag holder so as to extend between the first part and the second part, the radio-frequency identification tag is locatable in the sling with the first part of the tag holder inserted in the first tag receiving hole and the second part of the tag holder inserted in the second tag receiving hole, such that moving the closure flap to the unfolded configuration moves the sling away from the first and second tag receiving holes and causes the frangible part of the radio-frequency identification tag to break and the radio-frequency identification tag to cease functioning.

The two part tag holder may allow the radio-frequency identification tag to be similar to a conventional security seal, e.g. an adhesive label or such like. This means that the radio-frequency identification tag can be cheap and readily obtained. At the same time, because the radio-frequency identification tag and tag holder may be mounted between the sling and the tag receiving holes, it can be broken during movement of the closure flap into the unfolded configuration without the need to manipulate the radio-frequency identification tag directly. This means that the accessing the interior of the container though the opening may not be hindered by the presence of the radio-frequency identification tag as much as it would be by a seal placed over the edge of the closure flap.

In one example, the closure flap completely covers the opening in the folded configuration. This may improve the ability of the closure flap to keep contents provided in the interior volume of the container secure.

An inner flap foldable between the unfolded configuration and the folded configuration may also be provided, the first and second tag receiving holes may be provided in the inner flap and the inner flap may at least partially cover the opening in the folded configuration. Like the closure flap, the inner flap may optionally completely cover the opening in the folded configuration.

Typically, the first and second parts of the tag holder are completely separate from one another.

The first part of the tag holder may have an end that is wider than the first tag receiving hole such that the first part is not removable from the first tag receiving hole from a side of the first tag receiving hole located towards the outside of the container, and the second part of the tag holder may have an end that is wider than the second tag receiving hole such that the second part is not removable from the second tag receiving hole from a side of the second tag receiving hole located towards the outside of the container.

The end of the first part may be deformable so as to be insertable into the first tag receiving hole from the outside of the container, and the end of the second part may be deformable so as to be insertable into the second tag receiving hole from the outside of the container.

The end of the first part may have a notch to accommodate deformation during insertion into the first tag receiving hole, and the end of the second part may have a notch to accommodate deformation during insertion into the second tag receiving hole.

The first and second ends of the tag holder may each comprise a head and a neck, the head being wider than the neck and tapering in width away from the neck.

The tag holder may comprise a third part locatable between the first and second parts. The third part may be wider than the radio-frequency identification tag, such that it protrudes beyond an edge of the radio-frequency identification tag when the tag is mounted on the tag holder.

The radio-frequency identification tag may be substantially flat.

The container may have a tab that, with the closure flap in the folded configuration, is extendable out of the container such that pulling the tab out of the container causes the closure flap to move to the unfolded configuration.

The container may have a fastener by which the closure flap is releaseably securable in the folded configuration.

The container may have a cover removably mountable over the sling towards the outside of the container.

The closure flap may have two apertures defining the sling between them, and the apertures defining the sling may be slots.

The sling may be narrower at one end than another.

The container may comprise a first material and the inner flap may comprise a sheet of a second material. Additionally or alternatively, the container may comprise the first material and the closure flap may comprise a sheet of the second material.

The second material may be stiffer than the first material. In one example, the second material is a polycarbonate film.

According to a second aspect of the disclosure, there is provided a tamper detection system comprising the container described above and a radio-frequency identification tag reader.

According to a third aspect of the disclosure, there is provided a life vest stowage device comprising the container described above, arranged to contain a life vest.

According to a fourth aspect of the disclosure, there is provided a life vest stowage device comprising the container described above, and a life vest stowed inside the container.

Specific embodiments are described below, by way of example only, with reference to the accompanying drawings.

### Brief Description of Drawings

Figure 1 is a perspective view of a container according to a first embodiment.
Figure 2 is a cross-sectional view of the container according to the first embodiment, including a close up view of the container at an end where a closure flap is provided.
Figure 3 is an exploded perspective view of the container according to the first embodiment.
Figure 4 is an exploded perspective view of a radio-frequency identification tag and tag holder of the container of the first embodiment.
Figure 5 is a cut-away front view of the radio-frequency identification tag of the container of the first embodiment.
Figure 6 is a cross-sectional view of the container according to the first embodiment, with the closure flap and an inner flap in an unfolded configuration, including a close up view of the container at the end where the closure flap is provided.
Figure 7 is a perspective view of the container according to the first embodiment, with the closure flap and the inner flap in the unfolded configuration.
Figure 8 is a front view of a tag holder of a container according to a second embodiment.
Figure 9 is a perspective view of a radio-frequency identification tag and a tag holder of a container according to a third embodiment.

### Detailed Description of Preferred Embodiments

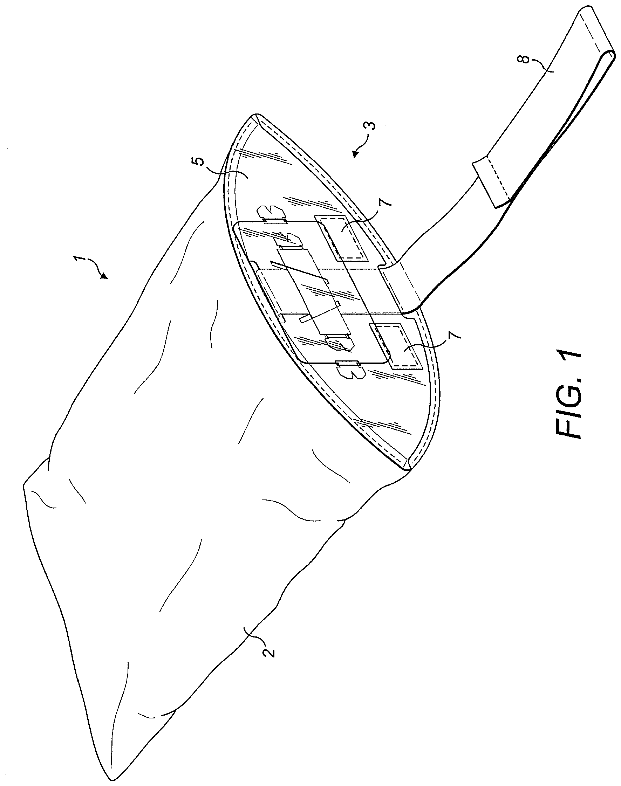

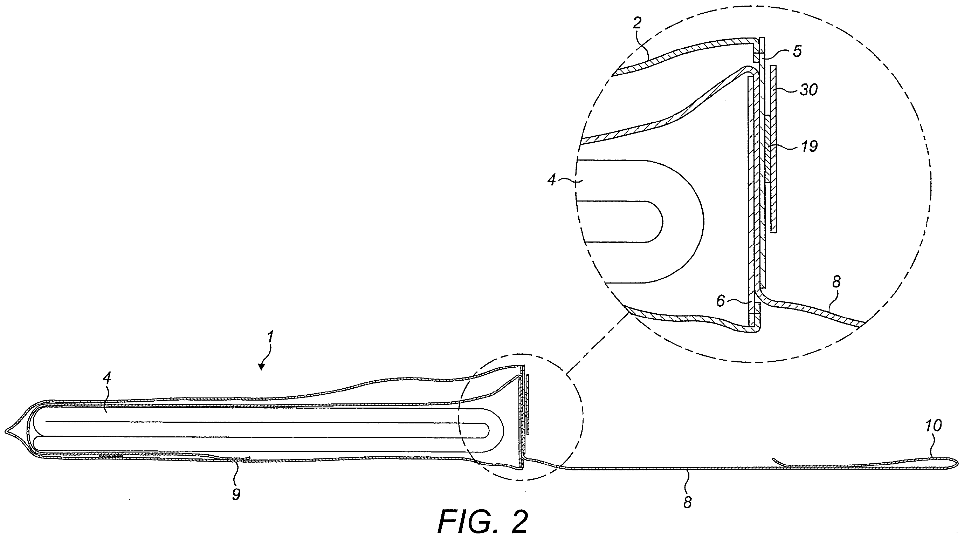

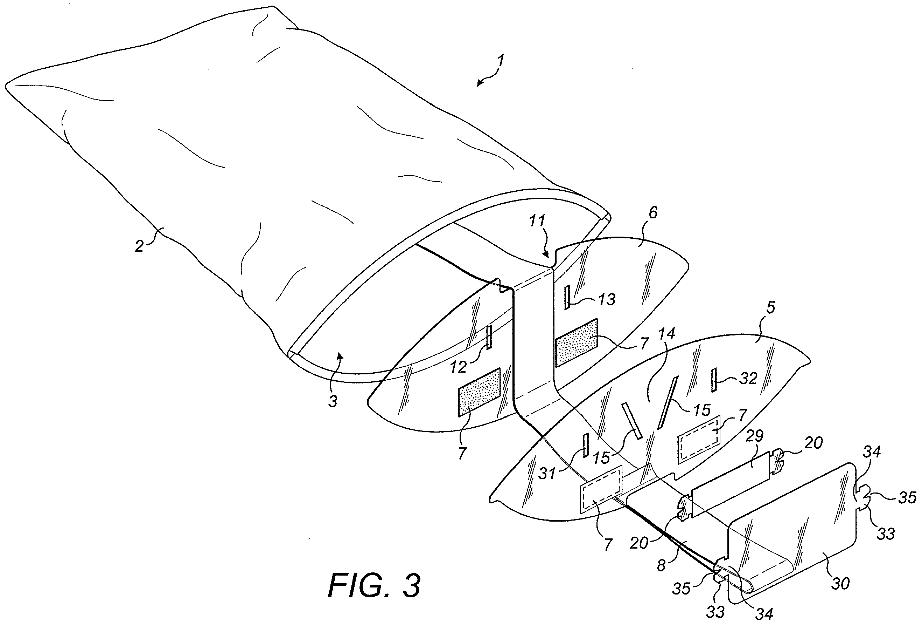

Referring to Figures 1 to 5, a container 1 according to a first embodiment comprises a receptacle 2 with an opening 3. In this embodiment, the container 1 is suitable for use on a commercial passenger aircraft as a life vest stowage device. As such, the receptacle 2 is suitable for housing a life vest 4 and the opening 3 allows the life vest 4 to be inserted into and removed from the receptacle 2. The container 1 is also securable under an aircraft seat, and straps or other mountings (not shown) are provided on the container 1 for this purpose, but are omitted from the accompanying drawings for clarity.

Conventionally, three different sizes of life vest 4 are specified for use on commercial passenger aircraft. When folded for stowing, a small life vest 4 is approximately 24cm long, 13cm and 6cm deep; a medium life vest 4 is approximately 22cm long, 16cm wide and 6cm deep and a large life vest 4 is approximately 22cm long, 20cm wide and 7cm deep. Typically, the receptacle 2 is large enough to be able to house a large life vest 4 snugly.

In this embodiment, the receptacle 2 is a bag. The bag is a single piece of a first material folded over itself and joined along its edges, except at one end where the opening 3 is provided in the receptacle 2. The opening 3 extends across the entire width of the receptacle 2.

In this embodiment, the first material is a cloth and the edges are joined by stitching. The cloth is typically fire resistant, and in this embodiment is a polyamide substrate with polyurethane coating and a fluorocarbon finish. In other embodiments, other types of cloth are used and the edges can be joined by glue or heat treatment. In order to accommodate a large life vest 4 snugly, the bag has a length L of approximately 26cm and a width W of approximately 24cm. The bag is flat when empty, and accommodates the life vest 4 by deforming to a required height, in a direction normal to the plane defined by its length L and width W. In other embodiments, the bag is of a different construction or has different dimensions. It is also possible for the receptacle 2 to be a box that is substantially non-deformable instead of a bag.

The container 1 has a closure flap 5, by which the opening 3 can be closed. The closure flap 5 is arranged such that it can be folded across the opening 3 to obstruct the opening 3, in a folded configuration. The closure flap 5 can be arranged to obstruct the opening 3 just partially in the folded configuration. However, in this embodiment, the closure flap 5 is arranged to obstruct the opening 3 completely. In order to achieve this, the closure flap 5 extends across the entire width of the receptacle 2, like the opening 3. The complete obstruction of the opening 3 has the advantage of allowing the closure flap 5 to help prevent access to the inside of the receptacle 2 in the folded configuration.

The container 1 also has an inner flap 6 that is arranged such that it can be folded across the opening 3 to obstruct the opening 3 in the folded configuration. The closure flap 5 is arranged to be folded across the opening 3 from a first side of the opening 3 and the inner flap 6 is arranged to be folded across the opening 3 from a second side of the opening 3. This allows the closure flap 5 to overlap the inner flap 6 in the folded configuration. In this embodiment, the first side and the second side of the opening 3 are opposite each other.

One or both of the closure flap 5 and the inner flap 6 may be integral with the receptacle, for example being the same material as the receptacle 2. However, in this embodiment, the closure flap 5 and the inner flap 6 each comprise a strip of a second material fixed to the outside of the receptacle 2. The second material is a polycarbonate film, such as Lexan®.

A fastener 7 is provided between the closure flap 5 and the inner flap 6. In this embodiment, the fastener 7 is a hook and loop fastener, such as Velcro®. A first part of the fastener 7, e.g. having hooks, is fixed to a surface of the closure flap 5 that faces the inner flap 6 in the folded configuration. A second part of the fastener 7, e.g. having loops, is fixed to a surface of the inner flap 6 that faces the closure flap 5 in the folded configuration. In the folded configuration, the two parts of the fastener 7 come together and releasably fasten the closure flap 5 and the inner flap 6 to each other. In this embodiment, the first part of the fastener 7 has two separate pieces at two separate locations on the surface of the closure flap 5, and the second part of the fastener 7 has two separate pieces at corresponding locations on the surface of the inner flap 6. This improves the reliability with which the fastener 7 fastens the closure flap 5 and the inner flap 6 to each other.

A tab 8 is provided to facilitate moving the closure flap 5 and the inner flap 6 from the folded configuration to an unfolded configuration in which the opening 3 is unobstructed by the closure flap 5 and the inner flap 6. The tab 8 is extendable from inside the receptacle 2 from an attachment point 9 on a side wall of the receptacle 2 on the same side of the receptacle 2 as the second side of the opening 3. One end of the tab 8 is fixed to the receptacle 2 at the attachment point 9. From the attachment point 9, the tab 8 extends out through the opening 3. A loop 10 is provided at the other end of the tab 8, to improve the ease with which a user can grasp the tab 8.

With the closure flap 5 and the inner flap 6 in the folded configuration, the tab 8 passes between the closure flap 5 and the inner flap 6 to the outside of the container 1. The closure flap 5 and inner flap 6 each have a recess 11 to accommodate the tab 8. The recess 11 of the closure flap 5 is provided on an edge of the closure flap 5 opposite to the first side of the opening 3 from which the closure flap 5 is folded across the opening 3. Similarly, the recess 11 of the inner flap 6 is provided on an edge of the inner flap 6 opposite to the second side of the opening 3 from which the inner flap 6 is folded across the opening 3. From the inside of the container 1, the tab 8 bends over the recess 11 on the edge of the inner flap 6, passes between the closure flap 5 and the inner flap 6, then bends over the recess 11 on the edge of the closure flap 6 to the outside of the container 1. In this embodiment, the recesses 11 are located such that the tab 8 is located between the two separate locations of the fastener 7 as it passes between the closure flap 5 and the inner flap 6.

The container 1 has a first tag receiving hole 12 and a second tag receiving hole 13, located so as to be covered by the closure flap 5 in the folded configuration. In this embodiment, the first tag receiving hole 12 and the second tag receiving hole 13 are provided on the inner flap 6. The first tag receiving hole 12 and the second tag receiving hole 13 extend through the inner flap 6, between the inside and the outside of the container 1.

The closure flap 5 incorporates a sling 14. The sling 14 can be provided as a distinct element attached to the closure flap 5, e.g. comprising a loop or strip of material. However, in this embodiment, the closure flap 5 has two apertures 15, and the sling 14 comprises the extent of the closure flap 5 between the two apertures 15. The apertures 15 are elongate, such that the sling 14 is also elongate. Indeed, the apertures 15 could be described as slots. In one embodiment, the apertures 15 are parallel to each other, such that the sling 14 has a substantially uniform width along its length. However, in the embodiment illustrated in Figures 1 to 5, the apertures 15 are closer to each other at one end than at the other. This causes the sling 14 to taper in width towards one end. In other words, the sling 14 is narrower at one end that at the other.

The closure flap 5 also has a first cover receiving hole 31 and a second cover receiving hole 32. The first and second cover receiving holes 31, 32 are similar to the first and second tag receiving holes 12, 13. They extend through the closure flap 5, between the inside and the outside of the container 1.

A tag holder 16 comprises first, second and third parts 17, 18, 19. In this embodiment, the first, second and third parts 17, 18, 19 are all completely separate from one another. However, in other embodiments, the first, second and third parts 17, 18, 19 can be joined to one another in a way that allows them to be separated, e.g. by frangible joints.

The tag holder 16 is flat. In this embodiment, the tag holder 16 is made of the same material as the closure flap 5 and the inner flap 6, that is the polycarbonate film, such as Lexan®.

One end of the first part 17 is insertable into the first tag receiving hole 12 and one end of the second part 18 is insertable into the second tag receiving hole 13. More specifically, the one end of the first part 17 and the one end of the second part 18 each have a head 20 and neck 21. The head 20 of the first part 17 is wider than the first tag receiving hole 12 and the head 20 of the second part 18 is wider than the second tag receiving hole 13. The heads 20 of the first and second parts 17,18 are tapered way from the first and second parts 17,18 respectively. This eases insertion of the ends of the first and second parts 17, 18 into the first and second tag receiving holes 12, 13. A notch 22 is provided in each of the heads 20, to accommodate deformation of the head 20 during insertion into the first and second tag receiving holes 12, 13. The notch 22 of each head 20 is located where the head 20 is inserted into the first and second tag receiving holes 12, 13, e.g. on a leading edge. In this embodiment, the notches 22 comprise V-shaped cut-outs.

The necks 21 of the first part 17 and the second part 18 are narrower in width than the respective heads 20. Adjacent each neck 21, the heads 20 extend perpendicularly outwards to wider than the first tag receiving hole 12 or second tag receiving hole 13 respectively. In other embodiments, the heads 20 extend outwards at an angle inclined towards the neck 21. In either case, with the head 20 of the first part 17 inserted in the first tag receiving hole 12, the head 20 abuts against a periphery of the first tag receiving hole 12 in such a way as to prevent it from being removed from the hole 12 from the side of the hole 12 via which it is inserted. Likewise, with the head 20 of the second part 18 inserted in the second tag receiving hole 13, the head 20 abuts against a periphery of the second tag receiving hole 13 in such a way as to prevent it from being removed from the hole 13 from the side of the hole 13 via which it is inserted.

The third part 19 of the tag holder 16 is located between the first and second parts 17, 18. The shapes of the first, second and third parts 17, 18, 19 are such that when they are placed in a row, a gap 23 can be provided between the first part 17 and the third part 19, and a gap 23 can be provided between the second part 18 and the third part 19, with a pair of edges that define the gap 23 between the first part 17 and the third part 19 being parallel to each other and a pair of edges that define the gap 23 between the second part 18 and the third part 19 being parallel to each other. The gaps 23, and hence the edges of the first, second and third parts 17, 18, 19 that define the gaps 23, may all be perpendicular to the length tag holder 16. However, in this embodiment, the third part 19 of the tag holder 16 is a trapezoid. Specifically, the edges of the third part 19 located adjacent to the first and second parts 17, 18 are arranged to be closer to one another at one end than at the other. This means that the gaps 23 are closer to one another at one end that at the other.

The dimensions of the third part 19 are similar to those of the sling 14. This means that the tag holder 14 can be arranged in the sling 14 such that the gaps 23 align with edges of the sling 14.

A Radio-Frequency Identification (RFID) tag 24 comprises a RFID chip 25, a near field antenna 26 and a far field antenna 27. The RFID tag 24 is an adhesive label. That is, it is substantially flat, and the RFID chip 25, near field antenna 26 and far field antenna 27 are provided on a substrate 28 of paper or plastics material with an adhesive surface.

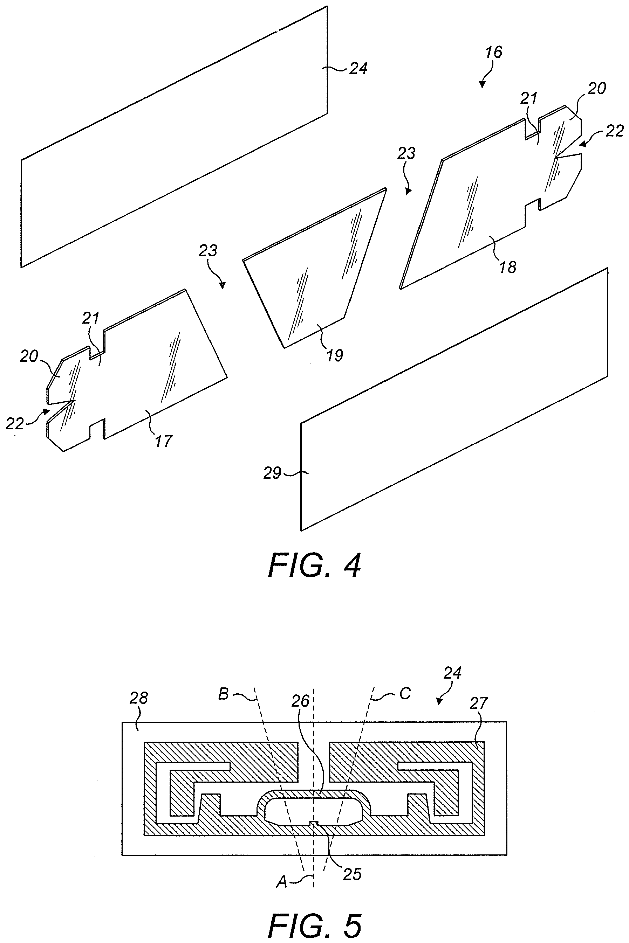

As can be seen in Figure 5, the RFID chip 25 is located approximately on a centre line A of the RFID tag 24, that is a line that bisects the length of the RFID tag 24. The near field antenna 26 comprises a loop of electrically conductive material extending on either side of the centre line A and the far field antenna 27 comprises two lobes of conductive material, one on each side of the centre line A.

A backing sheet 29 is also provided. The backing sheet 29 is a sheet of similar dimensions to the RFID tag 24. It comprises a paper or plastics material similar to the substrate 28 of the RFID tag 24, with an adhesive surface. The substrate 28 of the RFID tag 24 and the backing sheet 29 are both frangible. That is, they can be torn with a force less than that required to tear the tag holder 16, closure flap 5, inner flap 6 or receptacle 2.

The RFID tag 24 and backing sheet 29 are mountable on the tag holder 16. The tag holder 16 is arranged to have a similar width to that of the RFID tag 24 and the backing sheet 29, but to have a longer length. This allows the RFID tag 24 and backing sheet 29 to be mounted on the tag holder 16 with the heads 20 of the first and second parts 17, 18 protruding from each end.

A cover 30 is flat and, in this embodiment, is made of the same material as the tag holder 16, closure flap 5 and the inner flap 6, that is the polycarbonate film, such as Lexan®. Similarly to the tag holder 16, one end of the cover 30 is insertable into the first cover receiving hole 31 and one end of the cover 30 is insertable into the second cover receiving hole 32. Each end has a head 33 and neck 34 with the heads 33 being wider than the first and second cover receiving holes 31, 32. The heads 33 are tapered away from the cover 30 and have a notch 35 like the notch 22 if the heads 20 of the tag holder 16. The necks 34 are narrower in width than the heads 33 and, adjacent each respective neck 34, the heads 33 extend perpendicularly outwards to wider than the first and second cover holes 31, 32 such that, with the heads 33 inserted in the first and second cover receiving holes 31, 32, the heads 33 abut against a periphery of the first or second cover receiving holes 31, 32 respectively, so as to prevent the cover 30 from being removed from the side of the first or second cover receiving holes 31, 32 via which it is inserted. The first and second cover receiving holes 31, 32 are positioned such that, with the heads 33 of the cover 30 inserted in the respective holes 31, 32, the cover 30 is located over the sling 14.

In use, the life vest 4 is inserted into the receptacle 2 through the opening 3. As the life vest 4 is inserted into the receptacle 2, it meets the tab 8 where it extends from the attachment point 9 across the receptacle 2 to the opening 3. Pushing the life vest 4 into the receptacle 2 urges the tab 8 further into the receptacle 2, with the tab 8 extending around an end of the life vest 4 deepest within the receptacle 2.

With the life vest 4 inside the receptacle 2, the closure flap 5 and inner flap 6 are moved to the folded configuration to obstruct the opening 3. More specifically, the inner flap 6 is folded around an edge of the receptacle 2 on the second side of the opening 3 and the closure flap 5 is folded around an edge of the receptacle 2 on the first side of the opening 3.

The RFID tag 24 and backing sheet 29 are mounted on the tag holder 16 such that they face one another and sandwich the tag holder 16. Longer edges of the RFID tag 24, backing sheet 29 and tag holder 16 are aligned with one another, such that the assembly comprises a strip with the heads 20 and necks 21 of the tag holder 16 at each end. The first second and third parts 17, 18, 19 of the tag holder 16 are spaced apart from one another to provide gaps 23, and the RFID tag 24 is located such that the gaps 23 coincide approximately with lines B and C shown in Figure 5. That is, one gap 23 is on one side of the RFID chip 25 and the other gap 23 is on the other side of the RFID chip 25. It can be appreciated that tearing the RFID tag 24 along either of the lines B, C breaks both the near field antenna 26 and the far field antenna 27.

With the RFID tag 24 and backing sheet 29 mounted on the tag holder 16, the assembly is positioned in the sling 14. This is achieved by passing one end of the assembly through one of the apertures 15 and the other end of the assembly through the other of the apertures 15, from a side of the closure flap located towards the outside of the container 1. This leaves a central portion of the assembly in the sling 14 towards the outside of the container 1 and each end on a side of the closure flap 6 towards the inside of the container 1. In this position, one head 20 of the tag holder 16 can be inserted into the first tag receiving hole 12 and the other head 20 of the tag holder 16 can be inserted into the second tag receiving hole 13.

The sling 14 is located equidistant from the first and second tag receiving holes 12, 13. This means that, with the heads 20 of the tag holder 16 inserted in the first and second tag receiving holes 12, 13, the third part 19 of the tag holder 16 coincides with the sling 14 and each of the gaps 23 coincides with an edge of one of the apertures 15.

The cover 30 is then positioned over the sling 14 and the heads 33 of the cover 30 inserted into the cover receiving holes 32.

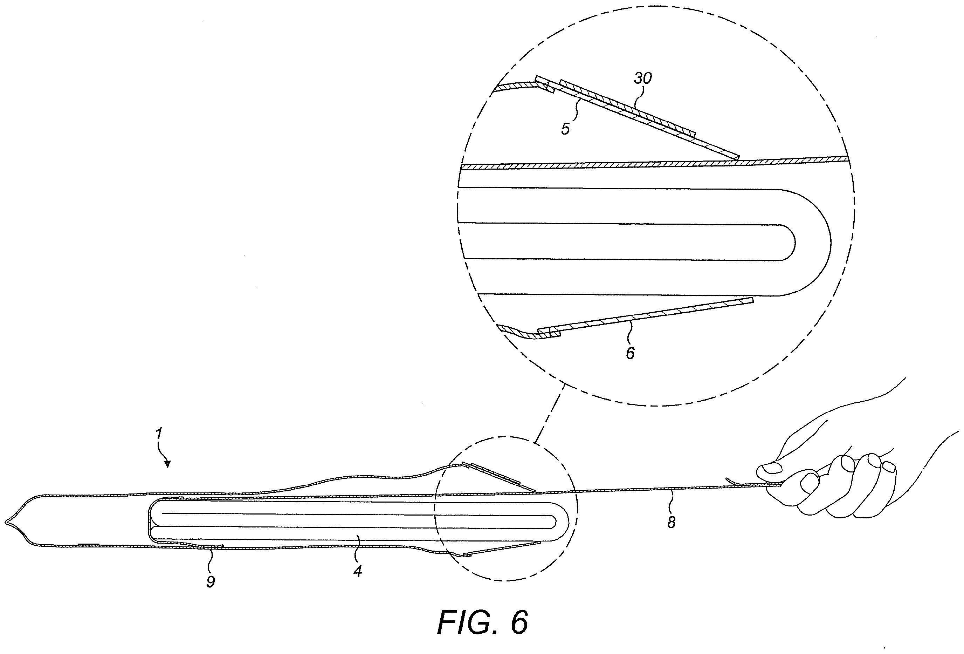

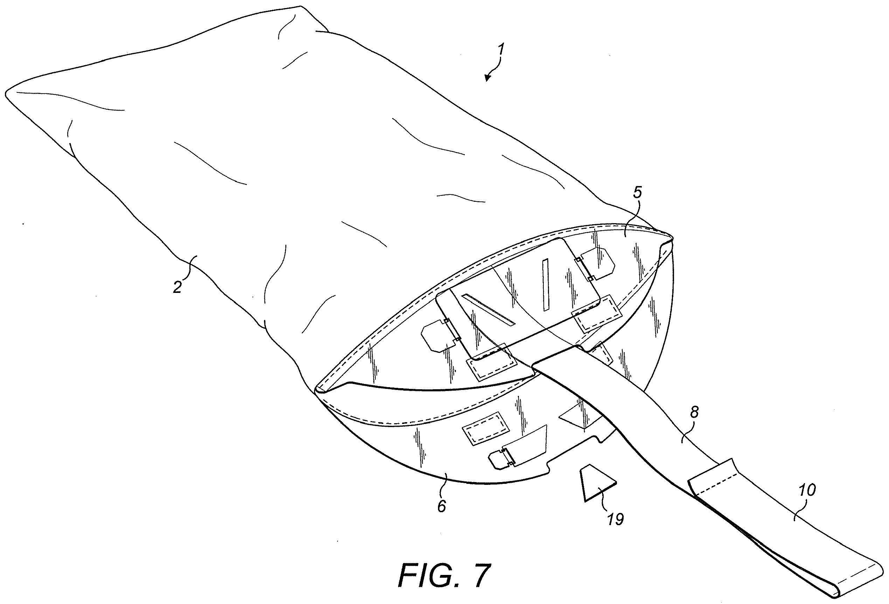

Should a passenger need to retrieve the life vest 4 from the container 1, the passenger pulls the tab 8 away from the receptacle 2. This urges the closure flap 5 and inner flap 6 into the unfolded configuration to leave the opening 3 unobstructed, as shown in Figures 6 and 7.

As the closure flap 5 moves away from the inner flap 6, the sling 14 moves away from the first and second tag receiving holes 17, 18. This urges the heads 20 of the tag holder 16 against a periphery of the first and second tag receiving holes 17, 18. However, as the heads 20 are wider than the first and second tag receiving holes 17, 18, they cannot pass through the holes 17, 18. The edges of the apertures 15 defining the sling 14 press against RFID tag 24 and backing sheet 29 at the gaps 23. As the substrate 28 and the backing sheet 29 are frangible, this causes the RFID tag 24 and the backing sheet 29 to tear. Typically, the RFID tag 24 is torn approximately along each of the lines B, C shown in Figure 5, breaking the near field and far field antennas 26, 27 and causing the RFID tag to cease functioning.

Further pulling of the tab 8 urges the life vest 4 out of the receptacle 2. The passenger can then reach into the receptacle 2 through the opening 3 and pull the life vest 4 out of the container 1. This means that the passenger can move the closure flap 5 and the inner flap 6 into the unfolded configuration and remove the life vest 3 from the container 1 with a force below the 6N required by airline regulations.

An RFID reader (not shown) can be used to read information from the RFID chip 25 whilst the life vest 4 is inside the container 1 and the RFID tag 24 is properly mounted. However, in the event that life vest 4 is removed from the container 1, the RFID tag 24 is destroyed and the RFID reader is unable to read information from the RFID chip 25, thereby indicting to a user that the container 1 requires attention, prior to any visual inspection of the container 1.

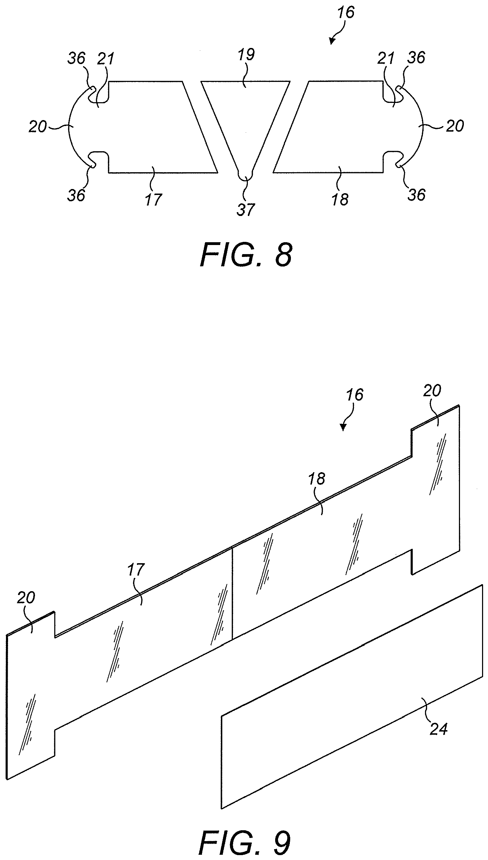

Referring to Figure 8, a container 1 according to a second preferred embodiment is similar to the container 1 according to the first preferred embodiment and the same reference numerals are used in the drawings for similar components. However, the tag holder 16 of the second embodiment has heads 20 of different shape to the heads 20 of the tag holder 16 of the first embodiment.

Specifically, in the second embodiment, each head 20 has two barbs 36. On each head 20, one barb 36 is on one side of the head 20 and the other barb 36 is on the other side of the head 20. Each barb 36 comprises a prong extending from the head 20, inclined towards the middle of the tag holder 16. The barbs 36 give the heads 20 an appearance similar to a pick axe.

The barbs 36 are thin enough to deflect towards the neck 21 of the head 20 on which they are mounted during insertion of the heads 20 into the first and second tag receiving holes 12, 13. This means that the notches 22 are not required, and accordingly the notches 22 are not present in the second embodiment.

On the other hand, when the closure flap 5 is moved towards the unfolded configuration, and away from the first and second tag receiving holes 12, 13, the barbs 36 abut against the periphery of the tag receiving holes 12, 13 and any deflection of the barbs 36 is away from the neck 21 of the head 20 on which they are mounted. This means that the width of the heads 20, including the barbs 36, is maintained or increased, and the heads 20 cannot be removed from the first and second tag receiving holes 12, 13 simply by being pulled via the sling 14.

Additionally, the third part 19 of the tag holder 16 is wider than the RFID tag 24 and the backing sheet 29. Specifically, the third part 18 is extended at its narrower end by a nib 37. The RFID tag 24 and backing sheet 29 can be mounted on the tag holder 16 such that the nib 37 extends beyond the edge of the RFID tag 24 and backing sheet 29. When the closure flap 5 is moved towards the unfolded configuration, and away from the first and second tag receiving holes 12, 13, the nib 37 is pressed against the edge of the RFID tag 24 by the sling 14. This improves the reliability with which the RFID tag 24 is torn along the lines B, C.

Referring to Figure 9 a container 1 according to a third preferred embodiment is similar to the container 1 according to the first preferred embodiment and the same reference numerals are used in the drawings for similar components. However, In the third embodiment, the first and second parts 17, 18 of the tag holder 16 are not inserted into the first and second tag receiving holes 13, 14 from a side of the closure flap 5 located towards the outside of the container 1.

The first tag receiving hole 12 is wide enough to allow all of the first part 17 of the tag holder 16 to pass through the hole 12 except for the head 20. Likewise, the second tag receiving hole 13 is wide enough to allow all of the second part 18 of the tag holder 16 to pass through the hole 13 except for the head 20. In order to mount the RFID tag 24 on the tag holder 16, the first part 17 of the tag holder 16 is inserted through the first tag receiving hole 12 from a side of the hole 12 located towards the inside of the container 1, and the second part 18 of the tag holder 16 is inserted through the second tag receiving hole 13 from a side of the hole 13 located towards the inside of the container 1. This leaves the first and second parts 17, 18 of the tag holder 16 protruding though the first and second tag receiving holes 12, 13 with the heads 20 towards the inside of the container 1 and the rest of the first and second parts 17, 18 towards the outside of the container 1.

The closure flap 5 is then moved to the folded configuration and the first and second parts 17, 18 of the tag holder 16 located in the sling 14 by passing the first and second parts 17, 18 of the tag holder 16 though the apertures 15 in the closure flap 5 from a side of the closure flap 5 towards the inside of the container 1. The RFID tag 24 is then mounted on the first and second parts 17, 18 whilst they are located in the sling 14.

The tag holder 16 of the third embodiment comprises just the first and second parts 17, 18, and the third part 18 is omitted. In order to achieve this, the first and second parts 17, 18 are arranged to abut one another. The RFID tag 24 is mounted in such a way that no gaps 23 are provided. This allows the backing sheet 29 also to be omitted, since, without the gaps 23, the entire adhesive surface of the RFID tag 24 is overlapped with the first and second parts 17, 18 of the tag holder 16.

Other variations and modifications will be apparent to the skilled person. Such variations and modifications may involve equivalent and other features which are already known and which may be used instead of, or in addition to, features described herein. Features that are described in the context of separate embodiments may be provided in combination in a single embodiment. Conversely, features which are described in the context of a single embodiment may also be provided separately or in any suitable subcombination.

It should be noted that the term "comprising" does not exclude other elements, the term "a" or "an" does not exclude a plurality, a single feature may fulfil the functions of several features recited in the claims and reference signs in the claims shall not be construed as limiting the scope of the claims. It should also be noted that the Figures are not necessarily to scale; emphasis instead generally being placed upon illustrating the principles of the present disclosure.

## Claims

1. A container (1) defining an interior volume, the container (1) comprising:
an opening (3) through which the interior volume is accessible from outside of the container (1);
first and second tag receiving holes (12, 13) extending between the interior volume and the outside of the container (1);
a tag holder (16) comprising first and second parts (17, 18) that are separable from one another; and
a radio-frequency identification tag (24) having a frangible part (28) arranged when broken to cause the radio-frequency identification tag (24) to cease functioning, **characterised by**
a closure flap (5) moveable between an unfolded configuration in which the opening (3) is uncovered and a folded configuration in which the closure flap (5) covers the first and second tag receiving holes (12, 13) towards the outside of the container (1) and at least partially covers the opening (3), the closure flap (5) having a sling (14), wherein the first part (17) of the tag holder (16) is insertable into the first tag receiving hole (12) but not removable from the first tag receiving hole (12) from a side of the first tag receiving hole (12) located towards the outside of the container (1), and the second part (18) of the tag holder (16) is insertable into the second tag receiving hole (13) but not removable from the second tag receiving hole (13) from a side of the second tag receiving hole (13) located towards the outside of the container (1), and, with the closure flap (5) in the folded configuration and the radio-frequency identification tag (24) mounted on the tag holder (16) so as to extend between the first part (17) and the second part (18), the radio-frequency identification tag (24) is locatable in the sling (14) with the first part (17) of the tag holder (16) inserted in the first tag receiving hole (12) and the second part (18) of the tag holder (16) inserted in the second tag receiving hole (13), such that moving the closure flap (5) to the unfolded configuration moves the sling (14) away from the first and second tag receiving holes (12, 13) and causes the frangible part (28) of the radio-frequency identification tag (24) to break and the radio-frequency identification tag (24) to cease functioning.

2. The container (1) of claim 1, wherein the closure flap (5) completely covers the opening (3) in the folded configuration.

3. The container (1) of claim 1 or claim 2, comprising an inner flap (6) foldable between the unfolded configuration and the folded configuration, wherein the first and second tag receiving holes (12, 13) are provided in the inner flap (6) and the inner flap (6) at least partially covers the opening (3) in the folded configuration and preferably completely covers the opening (3) in the folded configuration.

4. The container (1) of any one of the preceding claims, wherein the first and second parts (17, 18) of the tag holder (16) are completely separate from one another.

5. The container (1) of any one of the preceding claims, wherein the first part (17) of the tag holder (16) has an end that is wider than the first tag receiving hole (12) such that the first part (17) is not removable from the first tag receiving hole (12) from a side of the first tag receiving hole (12) located towards the outside of the container (1), and wherein the second part (18) of the tag holder (16) has an end that is wider than the second tag receiving hole (13) such that the second part (18) is not removable from the second tag receiving hole (13) from a side of the second tag receiving hole (13) located towards the outside of the container (1).

6. The container (1) of claim 5, wherein the end of the first part (17) is deformable so as to be insertable into the first tag receiving hole (12) from the outside of the container (1), and wherein the end of the second part (18) is deformable so as to be insertable into the second tag receiving hole (13) from the outside of the container(1), and preferably wherein the end of the first part (17) has a notch (22) to accommodate deformation during insertion into the first tag receiving hole (12), and the end of the second part (18) has a notch (22) to accommodate deformation during insertion into the second tag receiving hole (13).

7. The container (1) of any one of the preceding claims, wherein the first and second ends of the tag holder (16) each comprise a head (20) and a neck (21), the head (20) being wider than the neck (21) and tapering in width away from the neck (21).

8. The container (1) of any one of the preceding claims, comprising a third part (19) locatable between the first and second parts (17, 18), preferably wherein the third part (19)is wider than the radio-frequency identification tag (24), such that it protrudes beyond an edge of the radio-frequency identification tag (24) when the tag (24) is mounted on the tag holder (16).

9. The container (1) according to any one of the preceding claims, wherein the radio-frequency identification tag (24) is substantially flat.

10. The container (1) according to any one of the preceding claims, comprising a tab (8) that, with the closure flap (5) in the folded configuration, is extendable out of the container (1) such that pulling the tab (8) out of the container (1) causes the closure flap (5) to move to the unfolded configuration.

11. The container (1) according to any one of the preceding claims, comprising a fastener (7) by which the closure flap (5) is releaseably securable in the folded configuration.

12. The container (1) according to any one of the preceding claims, comprising a cover (30) removably mountable over the sling (14) towards the outside of the container (1).

13. The container (1) according to any one of the preceding claims, wherein the closure flap (5) has two apertures (15) defining the sling (14) between them, preferably wherein the apertures (15) defining the sling (14) are slots and preferably wherein the sling (14) is narrower at one end than another.

14. The container (1) according to any one of the preceding claims, wherein the container comprises a first material and the closure flap comprises a sheet of a second material, preferably wherein the second material is stiffer than the first material and preferably wherein the second material is a polycarbonate film.

15. A life vest stowage device comprising the container according to any one of the preceding claims arranged to contain a life vest and a life vest stowed inside the container.

## Patentansprüche

1. Behälter (1), der ein Innenvolumen definiert, wobei der Behälter (1) umfasst:
eine Öffnung (3), durch die das Innenvolumen von außerhalb des Behälters (1) zugänglich ist;
erste und zweite Etikettaufnahmelöcher (12, 13), die sich zwischen dem Innenvolumen und der Außenseite des Behälters (1) erstrecken;
einen Etikettenhalter (16) mit ersten und zweiten Teilen (17, 18), die voneinander trennbar sind; und
eine Radiofrequenz-Identifikationsetikette (24) mit einem zerbrechlichen Teil (28), der bei Bruch angeordnet ist, um zu bewirken, dass die Radiofrequenz-Identifikationsetikette (24) aufhört zu funktionieren, **gekennzeichnet durch**
eine Verschlußklappe (5), die zwischen einer ungefalteten Konfiguration, in der die Öffnung (3) freiliegt, und einer gefalteten Konfiguration, in der die Verschlußklappe (5) die ersten und zweiten Etikettaufnahmelöcher (12, 13) zur Außenseite hin abdeckt, bewegbar ist Behälter (1) und deckt die Öffnung (3) zumindest teilweise ab, wobei die Verschlußklappe (5) eine Schlinge (14) aufweist, wobei der erste Teil (17) des Etikettenhalters (16) in die erste Etikettenaufnahmeloch (12) einsetzbar ist aber nicht von dem ersten Etikettenaufnahmeloch (12), das sich zur Außenseite des Behälters (1) hin befindet, und dem zweiten Teil (18) des Etikettenhalters (16) ist in das zweite Etikettenaufnahmeloch (13) einführbar, aber nicht von dem zweiten Etikettenaufnahmeloch (13) von einer Seite des zweiten Etikettenaufnahmelochs (13) entfernbar, die zur Außenseite des Behälters (1) hin angeordnet ist, und mit der Verschlußklappe (5) in der gefalteten Konfiguration und dem auf dem Etikettenhalter (16), um sich zwischen dem ersten Teil (17) und dem zweiten Teil (18) zu erstrecken, ist das Radiofrequenz-Identifikationsetikette (24) in der Schlinge (14) mit dem ersten Teil (17) des Etikettenhalters (16) festlegbar in das erste Etikettenaufnahmeloch (12) und den zweiten Teil (18) des Etikettenhalters (16) eingeführt, der in das zweite Etikettenaufnahmeloch (13) eingesetzt ist, so dass sich die Schließklappe (5) in die ungefaltete Konfiguration bewegt die Schlinge (14) von den ersten und zweiten Etikettenaufnahmelöchern (12, 13) entfernt ist und bewirkt, daß der zerbrechliche Teil (28) der Radiofrequenz-Identifikationsetikette (24) bricht und die Radiofrequenz-Identifikationsetikette (24) zu hör auf zu funktionieren.

2. Behälter (1) nach Anspruch 1, wobei die Verschlußklappe (5) die Öffnung (3) in der gefalteten Konfiguration vollständig überdeckt.

3. Behälter (1) nach Anspruch 1 oder Anspruch 2, umfassend eine innere Klappe (6), die zwischen der entfalteten Konfiguration und der gefalteten Konfiguration faltbar ist, wobei die ersten und zweiten Etikettaufnahmelöcher (12, 13) in der inneren Klappe (6) vorgesehen sind und die innere Klappe (6) die Öffnung (3) in der gefalteten Konfiguration zumindest teilweise überdeckt und vorzugsweise die Öffnung (3) in der gefalteten Konfiguration vollständig bedeckt.

4. Behälter (1) nach einem der vorhergehenden Ansprüche, wobei die ersten und zweiten Teile (17, 18) des Etikettenhalters (16) vollständig voneinander getrennt sind.

5. Behälter (1) nach einem der vorhergehenden Ansprüche, wobei der erste Teil (17) des Etikettenhalters (16) ein Ende aufweist, das breiter ist als das erste Etikettenaufnahmeloch (12), so dass der erste Teil (17) aus dem ersten Etikettenaufnahmeloch (12) von einer Seite des ersten Etikettenaufnahmelochs (12), die zur Außenseite des Behälters (1) hin angeordnet ist, nicht entfernbar ist, und wobei der zweite Teil (18) des Etikettenhalters (16) hat ein Ende, das breiter ist als das zweite Etikettenaufnahmeloch (13), so dass der zweite Teil (18) nicht von dem zweiten Etikettenaufnahmeloch (13) von einer Seite des zweiten Etikettenaufnahmelochs (13) entfernt werden kann zur Außenseite des Behälters (1) hin.

6. Behälter (1) nach Anspruch 5, wobei das Ende des ersten Teils (17) so verformbar ist, dass es von der Außenseite des Behälters (1) in das erste Etikettenaufnahmeloch (12) einführbar ist, und wobei der das Ende des zweiten Teils (18) ist so verformbar, dass es von der Außenseite des Behälters (1) in das zweite Etikettaufnahmeloch (13) einführbar ist, und wobei vorzugsweise das Ende des ersten Teils (17) eine Kerbe (22) aufweist, um eine Deformation während des Einführens in das erste Etikettaufnahmeloch (12) aufzunehmen, und das Ende des zweiten Teils (18) hat eine Kerbe (22), um eine Verformung während des Einsetzens in das zweite Etikettaufnahmeloch (13) aufzunehmen.

7. Behälter (1) nach einem der vorhergehenden Ansprüche, wobei das erste und das zweite Ende des Etikettenhalters (16) jeweils einen Kopf (20) und einen Hals (21) umfassen, wobei der Kopf (20) breiter ist als der Hals (21) und sich in der Breite vom Hals (21) verjüngend.

8. Behälter (1) nach einem der vorhergehenden Ansprüche, umfassend einen dritten Teil (19), der zwischen dem ersten und dem zweiten Teil (17, 18) angeordnet werden kann, wobei vorzugsweise der dritte Teil (19) breiter als die Radiofrequenz-Identifikationsetikette (24), so dass es über eine Kante des Radiofrequenz-Identifikationsetikette (24) vorsteht, wenn das Tag (24) an dem Tag-Halter (16) angebracht ist.

9. Behälter (1) nach einem der vorhergehenden Ansprüche, wobei das Radiofrequenz-Identifikationsetikette (24) im Wesentlichen flach ist.

10. Behälter (1) nach einem der vorhergehenden Ansprüche, umfassend eine Lasche (8), die mit der Verschlußklappe (5) in der gefalteten Konfiguration aus dem Behälter (1) herausziehbar ist, derart, dass die Lasche (8) gezogen wird aus dem Behälter (1) bewirkt, dass sich die Verschlußklappe (5) in die ungefaltete Konfiguration bewegt.

11. Behälter (1) nach einem der vorhergehenden Ansprüche, umfassend ein Befestigungselement (7), mit dem die Verschlußklappe (5) in der gefalteten Konfiguration lösbar festlegbar ist.

12. Behälter (1) nach einem der vorhergehenden Ansprüche, umfassend eine Abdeckung (30), die entfernbar über der Schlinge (14) zur Außenseite des Behälters (1) hin montierbar ist.

13. Behälter (1) nach einem der vorhergehenden Ansprüche, wobei die Verschlußklappe (5) zwei Öffnungen (15) aufweist, die die Schlinge (14) zwischen sich begrenzen, wobei vorzugsweise die Öffnungen (15) die Schlinge (14) begrenzen sind Schlitze und vorzugsweise ist die Schlinge (14) an einem Ende schmaler als an einem anderen.

14. Behälter (1) nach einem der vorhergehenden Ansprüche, wobei der Behälter ein erstes Material umfasst und die Verschlußklappe eine Folie aus einem zweiten Material umfasst, wobei vorzugsweise das zweite Material steifer ist als das erste Material und vorzugsweise das zweites Material ist eine Polycarbonatfolie.

15. Schwimmweste-Stauvorrichtung, umfassend den Behälter nach einem der vorhergehenden Ansprüche, der so angeordnet ist, dass er eine Schwimmweste und eine Schwimmweste enthält, die in dem Behälter verstaut sind.

## Revendications

1. Un récipient (1) définissant un volume intérieur, le récipient (1) comprenant:
une ouverture (3) à travers laquelle le volume intérieur est accessible depuis l'extérieur du récipient (1);
premier et second trous de réception d'étiquette (12, 13) s'étendant entre le volume intérieur et l'extérieur du récipient (1);
un porte-étiquette (16) comprenant des première et second parties (17, 18) qui peuvent être séparées l'une de l'autre; et
une radio-étiquette (24) ayant une partie frangible (28) agencée lorsqu'elle est cassée pour faire cesser le fonctionnement de la radio-étiquette (24), **caractérisée par**
un rabat de fermeture (5) mobile entre une configuration dépliée dans laquelle l'ouverture (3) est découverte et une configuration pliée dans laquelle le rabat de fermeture (5) recouvre les premier et second trous de réception d'étiquette (12, 13) vers l'extérieur du récipient (1) et recouvre au moins partiellement l'ouverture (3), le rabat de fermeture (5) comportant une élingue (14), la première partie (17) du porte-étiquette (16) pouvant être insérée dans le premier trou de réception d'étiquette (12) mais non amovible du premier trou de réception d'étiquette (12) d'un côté du premier trou de réception d'étiquette (12) situé vers l'extérieur du récipient (1), et la seconde partie (18) du porte-étiquette (16) peut être inséré dans le second trou de réception d'étiquette (13), mais non retiré du second trou de réception d'étiquette (13) d'un côté du second trou de réception d'étiquette (13) situé vers l'extérieur du récipient (1), et avec le rabat de fermeture (5) dans la configuration pliée et l'étiquette d'identification par radiofréquence (24) montée sur le porte-étiquette (16) de manière à s'étendre entre la première partie (17) et la deuxième partie (18), la radio-étiquette (24) est localisable dans l'élingue (14) avec la première partie (17) du porte-étiquette (16) insérée dans le premier trou de réception d'étiquette (12) et la seconde partie (18) du porte-étiquette (16) insérée dans le second trou de réception d'étiquette (13), de sorte que le rabat de fermeture (5) se déplace vers la configuration dépliée l'élingue (14) étant éloignée des premier et second trous de réception d'étiquette (12, 13) et faisant rompre la partie frangible (28) de la radio-étiquette (24) et la radio-étiquette (24) cesser de fonctionner.

2. Récipient (1) selon la revendication 1, dans lequel le rabat de fermeture (5) recouvre complètement l'ouverture (3) dans la configuration repliée.

3. Récipient (1) selon la revendication 1 ou 2, comprenant un rabat intérieur (6) pliable entre la configuration dépliée et la configuration pliée, dans lequel les premier et second trous de réception d'étiquette (12, 13) sont prévus dans le rabat intérieur (6) et le rabat intérieur (6) recouvre au moins partiellement l'ouverture (3) dans la configuration pliée et recouvre de préférence complètement l'ouverture (3) dans la configuration repliée.

4. Récipient (1) selon l'une quelconque des revendications précédentes, dans lequel les première et seconde parties (17, 18) du porte-étiquette (16) sont complètement séparées l'une de l'autre.

5. Récipient (1) selon l'une quelconque des revendications précédentes, dans lequel la première partie (17) du porte-étiquette (16) a une extrémité qui est plus large que le premier trou de réception d'étiquette (12) de telle sorte que la première partie (17) ne peut pas être retiré du premier trou de réception d'étiquette (12) d'un côté du premier trou de réception d'étiquette (12) situé vers l'extérieur du récipient (1), et dans lequel la seconde partie (18) du porte-étiquette (16) a une extrémité plus large que le deuxième trou de réception d'étiquette (13) de sorte que la seconde partie (18) ne peut pas être retirée du second trou de réception d'étiquette (13) d'un côté du second trou de réception d'étiquette vers l'extérieur du récipient (1).

6. Récipient (1) selon la revendication 5, dans lequel l'extrémité de la première partie (17) est déformable de manière à pouvoir être insérée dans le premier trou de réception d'étiquette (12) depuis l'extérieur du récipient (1), et l'extrémité de la seconde partie (18) est déformable de manière à pouvoir être insérée dans le second trou de réception d'étiquette (13) depuis l'extérieur du récipient (1), et de préférence dans une extrémité de la première partie (17) comporte une encoche (22) pour s'adapter à la déformation pendant l'insertion dans le premier trou de réception d'étiquette (12), et l'extrémité de la seconde partie (18) comporte une encoche (22) pour s'adapter à la déformation pendant l'insertion dans le second trou de réception d'étiquette (13).

7. Récipient (1) selon l'une quelconque des revendications précédentes, dans lequel les première et seconde extrémités du porte-étiquette (16) comprennent chacune une tête (20) et un col (21), la tête (20) étant plus large que le col (21) et s'effilant en largeur à l'écart du col (21).

8. Récipient (1) selon l'une quelconque des revendications précédentes, comprenant une troisième partie (19) pouvant être placée entre les première et seconde parties (17, 18), de préférence dans laquelle la troisième partie (19) est plus large que la radio-étiquette (24), de sorte qu'elle dépasse au-delà d'un bord de la radio-étiquette (24) lorsque l'étiquette (24) est montée sur le porte-étiquette (16).

9. Récipient (1) selon l'une quelconque des revendications précédentes, dans lequel la radio-étiquette (24) est sensiblement plate.

10. Récipient (1) selon l'une quelconque des revendications précédentes, comprenant une languette (8) qui, avec le rabat de fermeture (5) en configuration pliée, est extensible hors du récipient (1) de manière à tirer la languette (8) hors du récipient (1) provoque le déplacement du rabat de fermeture (5) vers la configuration dépliée.

11. Récipient (1) selon l'une quelconque des revendications précédentes, comprenant une attache (7) par laquelle le rabat de fermeture (5) peut être solidarisé de façon libérable dans la configuration repliée.

12. Récipient (1) selon l'une quelconque des revendications précédentes, comprenant un couvercle (30) pouvant être monté de manière amovible sur l'élingue (14) vers l'extérieur du récipient (1).

13. Récipient (1) selon l'une quelconque des revendications précédentes, dans lequel le rabat de fermeture (5) comporte deux ouvertures (15) délimitant l'élingue (14) entre elles, de préférence dans lesquelles les ouvertures (15) délimitent l'élingue (14) sont des fentes et de préférence dans lesquelles l'élingue (14) est plus étroite à une extrémité qu'à l'autre.

14. Récipient (1) selon l'une quelconque des revendications précédentes, dans lequel le récipient comprend un premier matériau et le rabat de fermeture comprend une feuille d'un second matériau, de préférence dans laquelle le deuxième matériau est plus rigide que le premier matériau et de préférence le deuxième matériau est un film de polycarbonate.

15. Dispositif de rangement de gilet de sauvetage comprenant le récipient selon l'une quelconque des revendications précédentes agencé pour contenir un gilet de sauvetage et un gilet de sauvetage rangé à l'intérieur du récipient.
